# EUROPÄISCHE PATENTSCHRIFT

(11) **EP 1 337 000 B1**
(45) Veröffentlichungstag und Bekanntmachung des Hinweises auf die Patenterteilung: **17.09.2008**
(21) Anmeldenummer: 03002701.5
(22) Anmeldetag: 06.02.2003
(51) Int. Cl.: H01M 8/06, B01D 53/24

(54) **Brennstoffzellenanlage**
Fuel cell unit
Dispositif de piles à combustible

(30) Priorität: 15.02.2002 DE 10206238; 30.09.2002 DE 10245660
(43) Veröffentlichungstag der Anmeldung: 20.08.2003
(73) Patentinhaber: ROBERT BOSCH GMBH, 70442 Stuttgart (DE)
(72) Erfinder: Faye, Ian, 70192 Stuttgart (DE); Brenner, Frank, 71686 Remseck (DE); Weiss, Hans-Ruediger, 70376 Stuttgart (DE); Nguyen-Schaefer, Thanh-Hung, 71679 Asperg (DE); Hebner, Thomas, 70195 Stuttgart (DE)

(56) Entgegenhaltungen:
- DE-C- 399 620
- US-A- 3 877 892
- US-A- 5 429 886

## Beschreibung

Die Erfindung betrifft eine Brennstoffzellenanlage mit einer Brennstoffzelleneinheit und einer Umformeinheit zur Umformung von Stoffgemischen zu einem wasserstoffhaltigen Fluidstrom nach dem Oberbegriff des Anspruchs 1.

### Stand der Technik:

Bislang werden bei Brennstoffzellenanlagen häufig insbesondere kohlenwasserstoffhaltige Stoffgemische mittels einer Reformation oder dergleichen zu einem wasserstoffhaltigen Fluidstrom bzw. Reformat umgewandelt. Der hierdurch erzeugte Wasserstoff wird in der Brennstoffzelleneinheit vor allem zu elektrischem Strom umgewandelt und dieser wiederum zum Antrieb von Elektromotoren oder zum Betrieb sonstiger elektrischer Verbraucher verwendet. Entsprechende Systeme werden beispielsweise in Fahrzeugen für den Antrieb und/oder zum Betrieb der zahlreichen elektrischen Verbraucher eingesetzt.

Neben Wasserstoff entstehen bei diesen Systemen auch die Nebenprodukte Kohlenmonoxid bzw. Kohlendioxid. Kohlenmonoxid ist für heute gebräuchliche Brennstoffzelleneinheiten im Allgemeinen schädlich, so dass dieses mittels entsprechender Reinigungsvorrichtungen zu Kohlendioxid umgeformt wird. So weist der Fluidstrom, der der Brennstoffzelleneinheit zugeführt wird, einen vergleichsweise hohen Anteil an Kohlendioxid auf, das von der Brennstoffzelleneinheit nicht verwertet wird.

Gebräuchliche Brennstoffzelleneinheiten können den im Fluidstrom enthaltenen Wasserstoff nicht vollständig umsetzen, so dass der Abstrom der Brennstoffzelleneinheit einen gewissen Anteil an Wasserstoff aufweist, Einer Kreislaufführung bzw. Rezirkulation dieses Abstromes wieder zurück in die Brennstoffzelleneinheit steht der vergleichsweise hohe Kohlendioxidanteil entgegen, da dieser innerhalb kurzer Zeit stark ansteigen und hierdurch den Betrieb der Brennstoffzelleneinheit bzw. die Stromerzeugung stark beeinträchtigen würde.

Gemäß der Druckschrift US 6,063,515 ist bereits die Verwendung eines Separators bzw. einer Trennvorrichtung bekannt, mit Hilfe derer das Kohlendioxid bzw. der Wasserstoff vom Reststrom abgetrennt wird. Hierdurch ist eine Kreislaufführung des aus der Brennstoffzelleneinheit ausströmenden Abstromes möglich. Diese bereits bekannte Trennvorrichtung bzw. Separatoreinheit weist unter anderem eine Membran auf. Nachteilig hierbei ist der vergleichsweise große verfahrenstechnische bzw. konstruktive Aufwand als auch der notwendige relativ hohe Druck zur Beaufschlagung der Membran.

Weiterhin ist aus der US -A-5429886 eine Brennstoffzellenanlage mit einer Trennvorrichtung zur Abtrennung von Wasserstoff aus Gasgemischen mittels Zentrifugalkräften bekannt, dabei ist die Abtrennvorrichtung zwischen einem Reformer und einem Brennstoffzellenstack des Brennstoffzellensystems positioniert.

### Aufgabe und Vorteile der Erfindung:

Aufgabe der Erfindung ist es demgegenüber, eine Brennstoffzellenanlage mit einer Brennstoffzelleneinheit, einer Umformeinheit zur Umformung von Stoffgemischen zu einem wasserstoffhaltigen Fluidstrom und einer Trennvorrichtung zur Abtrennung wenigstens eines wasserstoffangereicherten Stoffstroms von einem Fluidreststrom vorzuschlagen, mit der der Aufwand gegenüber dem Stand der Technik reduziert wird.

Diese Aufgabe wird, ausgehend von einer Brennstoffzellenanlage der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Brennstoffzellenanlage dadurch aus, dass die Trennvorrichtung, die als Massentrennvorrichtung zur Abtrennung unterschiedlicher Massen ausgebildet ist, in Strömungrichtung des Fluidstroms hinter der Brennstoffzelleneinheit angeordnet ist und dass der abgetrennte wasserstoffangereicherte Stoffstrom der Brennstoffzelleneinheit zuführbar ist.

Mit Hilfe der Massentrennvorrichtung ist eine Abtrennung des bezüglich der Masse relativ leichten, wasserstoffhaltigen Stoffstroms vom bezüglich der Masse relativ schweren Fluidreststrom, insbesondere CO₂-haltigen Fluidreststrom, ohne großen Aufwand gewährleistet. Möglicherweise erfolgt wenigstens teilweise die Trennung der Ströme mit Hilfe der Schwerkraft oder dergleichen. Beispielsweise kann die Erzeugung einer vergleichsweise hohen Druckbeaufschlagung des Fluidstroms gemäß dem Stand der Technik entfallen.

Vorzugsweise weist die Massentrennvorrichtung wenigstens ein Umlenkelement zum Umlenken des Fluidstroms auf. Der Fluidstrom weist in vorteilhafter Weise eine relativ hohe Strömungsgeschwindigkeit auf. Hierdurch wird eine radiale Beschleunigung des Fluidstroms bzw. Reformats erreicht, wodurch eine Trennung aufgrund der unterschiedlich schweren molekularen Gewichte und der hieraus resultierenden unterschiedlichen Zentrifugalkräfte erfolgen kann.

Die Massentrennvorrichtung mit dem Umlenkelement ist in Strömungsrichtung hinter der Brennstoffzelleneinheit angeordnet. Vorzugsweise ist die Massentrennvorrichtung mit dem Umlenkelement zwischen der Umformeinheit und der Brennstoffzelleneinheit bzw. in Strömungsrichtung hinter einer sogenannten "Shift-Stufe" oder dergleichen angeordnet, da der Fluidstrom in diesem Bereich eine vergleichsweise hohe und im Wesentlichen kontinuierliche Strömungsgeschwindigkeit aufweist.

In vorteilhafter Weise ist das Umlenkelement als Kreisbogenelement ausgebildet. Ein entsprechend ausgebildetes rohrförmiges Kreisbogenelement kann einen vorteilhaften Krümmungsradius zur Zentrifugalbeschleunigung des Fluidstroms aufweisen.

In einer besonderen Weiterbildung der Erfindung weist die Massentrennvorrichtung wenigstens ein Verzögerungselement zum Verzögern der Strömungsgeschwindigkeit auf. Vorzugsweise ist das Verzögerungselement in Strömungsrichtung hinter dem Umlenkelement angeordnet. Mit Hilfe dieser Maßnahmen wird ermöglicht, dass eine gegebenenfalls mittels des Umlenkelementes erreichte Teiltrennung der Ströme durch das Verzögerungselement weiter verbessert wird.

Das Verzögerungselement weist in bevorzugter Weise einen wesentlich größeren Strömungsquerschnitt als das Umlenkelement auf, wodurch sich die Strömungsgeschwindigkeit des Fluidstroms bzw. Stoffstroms/Fluidreststroms gegenüber der Strömungsgeschwindigkeit im Umlenkelement wesentlich verringert. Hierdurch wird in besonders einfacher Weise eine Beruhigung bzw. Verzögerung der Strömungsgeschwindigkeit erreicht. Eine entsprechende Verzögerung bzw. Beruhigung der Ströme verbessert zusätzlich die Trennung des wasserstoffhaltigen Stoffstroms vom Fluidreststrom.

In einer alternativen Ausführungsform der Erfindung kann das Verzögerungselement auch ohne ein spezielles Umlenkelement, d.h. ohne Massentrennung mittels der Zentrifugalkraft, verwendet werden.

Die Massentrennvorrichtung ohne dem speziellen Umlenkelement ist in Strömungsrichtung hinter der Brennstoffzelleneinheit angeordnet, da der Fluidstrom in diesem Bereich relativ einfach mittels dem Verzögerungselement beruhigt werden kann, so dass das Verzögerungselement ganz besonders weitgehend als Beruhigungselement auszubilden ist. Hierdurch weist der zu trennende Fluidstrom eine vergleichsweise geringe Strömungsgeschwindigkeit auf und/oder kann in vorteilhafter Weise mit Hilfe dem Verzögerungselement gestaut bzw. zwischengespeichert werden. Im letztgenannten Fall kann eine vorteilhafte diskontinuierliche bzw. chargenweise Trennung des Stoffstroms vom Fluidreststrom bzw. Entleerung des Verzögerungselements vorgesehen werden.

Gerade mit Hilfe der hinter der Brennstoffzelleneinheit angeordneten Massentrennvorrichtung kann insbesondere auch der mittels der Umgebungsluft in die Brennstoffzelleneinheit eingebrachte und durch deren Membran hindurchdiffundierte Stickstoff vom wasserstoffhaltigen Stoffstrom getrennt werden. Die Weiterverwertung bzw. Kreislaufführung des wasserstoffhaltigen Stoffstroms wird hierdurch wesentlich verbessert.

In einer weiteren besonderen Variante der Erfindung weist das Verzögerungselement eine erste Öffnung zum Ausströmen des wasserstoffangereicherten Stoff Stroms und eine zweite Öffnung zum Ausströmen des Fluidreststroms auf, wobei vorteilhafterweise die erste Öffnung in vertikaler Richtung oberhalb der zweiten Öffnung angeordnet ist. In vorteilhafter Weise ist die zweite Öffnung am in vertikaler Richtung tiefsten Bereich des Verzögerungselementes und/oder die erste Öffnung am in vertikaler Richtung höchsten Bereich des Verzögerungselementes angeordnet. Mit Hilfe einer entsprechend angeordneten Art und Weise der Öffnungen bzw. einem entsprechend ausgebildeten Verzögerungselement kann unter Zuhilfenahme der Schwerkraft bzw. Erdbeschleunigung eine zusätzliche Abtrennung des wasserstoffangereicherten Stoffstroms von dem Fluidreststrom bzw. Restgasstrom wie z.B. vom Kohlendioxid- und/oder Stickstoffstrom erfolgen.

In einer besonderen Ausführungsform der Erfindung ist wenigstens an einer der Öffnungen, vorzugsweise an der zweiten Öffnung zum Ausströmen des Fluidreststroms und gegebenenfalls an der ersten Öffnung zum Ausströmen des wasserstoffhaltigen Stoffstroms, je ein Dosierelement angeordnet. Hierdurch wird eine Abführung des Fluidreststroms bzw. Stoffstroms ohne großen Aufwand regelbar.

Bei der Anordnung des Massentrennvorrichtung in Strömungsrichtung hinter der Brennstoffzelleneinheit, ist wenigstens eines der Dosierelemente als Taktventil oder dergleichen ausgebildet. Hiermit wird eine besonders einfache Umsetzung einer diskontinuierlichen bzw. chargenweisen Betriebsweise der Massentrennvorrichtung ermöglicht. Während einer Wartephase kann sich der relativ leichte, wasserstoffhaltige Anteil vom schwereren Rest weitgehend trennen. Diese können nach der Wartephase vorteilhaft getrennt aus dem Verzögerungselement herausströmen bzw. abgelassen und/oder mittels einer Pumpe oder dergleichen entsprechend herausgepumpt werden. Beispielsweise kann die Wartezeit ca. fünf bis zwanzig Minuten oder länger dauern.

Vorteilhafterweise ist an einer Einströmöffnung des Verzögerungselements wenigstens ein Einströmelement und/oder an der ersten und/oder zweiten Öffnung wenigstens ein Ausströmelement angeordnet, wobei diese vorzugsweise wenigstens teilweise im Innenbereich des Verzögerungselementes angeordnet sind. Mit Hilfe entsprechender Ein- bzw. Ausströmelemente kann die Position des Einströmbereiches und/oder die Position der Ausströmbereiche im gesamten Innenraum des Verzögerungselementes genau festgelegt werden. Beispielsweise wird mittels dem Einströmelement der Einströmbereich des Fluidstromes im unteren Abschnitt des Verzögerungselementes angeordnet, so dass eine Verwirbelung bzw. Durchmischung des im oberen Abschnitt angereicherten wasserstoffhaltigen Anteils wirkungsvoll verhindert wird. Alternativ oder in Kombination hierzu kann die Einströmöffnung des Verzögerungselementes im unteren Abschnitt angeordnet werden.

In einer besonderen Weiterbildung der Erfindung weist das Einströmelement und/oder das Ausströmelement mehrere Durchlässe zum Ein- bzw. Ausströmen der Ströme auf. Mehrere bzw. zahlreiche Durchlässe, durch die die Fluide ein- bzw. ausströmen, vergrößern in vorteilhafter Weise die Querschnittsfläche der Ein- bzw. Ausströmöffnung und bewirken ein vergleichsweise geringes Verwirbeln der Ströme, so dass eine vorteilhafte Massentrennung gemäß der Erfindung realisierbar ist. Beispielsweise umfassen die Einström- bzw. Ausströmelemente ein poröses Material. Gegebenenfalls wird das poröse Material mittels einem Schaumstoff und/oder Sintermaterial, usw. realisiert. Gegebenenfalls werden die Durchlässe als relativ kleine Durchgangsbohrungen verwirklicht, z.B. mit Durchmessern von einigen 100 µm.

Mit Hilfe einer oder mehrerer der vorgenannten Maßnahmen ist eine vorteilhafte Abreicherung vor allem der Restgase wie z.B. des Kohlendioxids, Stickstoffs, Stickoxiden, usw. vom Fluidreststrom bzw. Reformatstrom-möglich, so dass in diesem Fall der wasserstoffangereicherte Stoffstrom der Brennstoffzelleneinheit zugeführt und nach Durchströmen der Brennstoffzelleneinheit zur weiteren Ausnutzung des nicht umgesetzten Wasserstoffs dieser Abstrom der Brennstoffzelleneinheit wieder erneut zugeführt werden kann. Hierdurch wird eine nachteilige Anreicherung von Kohlendioxid oder dergleichen bzw. anderen in der Brennstoffzelle nicht umgesetzten Gasen im reziklierten Stoffstrom verhindert.

### Ausführungsbeispiel:

Ein Ausführungsbeispiel der Erfindung ist in der Zeichnung dargestellt und wird anhand der Figuren nachfolgend näher erläutert.

Im Einzelnen zeigen:
- Figur 1: in schematischer Darstellung eine Trennvorrichtung mit einem Kreisbogen,
- Figur 2: in schematischer Darstellung eine weitere Trennvorrichtung,
- Figur 3: in schematischer Darstellung eine dritte Trennvorrichtung mit Strömungspuffer und
- Figur 4: ein schematisches Blockschaltbild mit einer erfindungsgemäßen Brennstoffzelleneinheit.

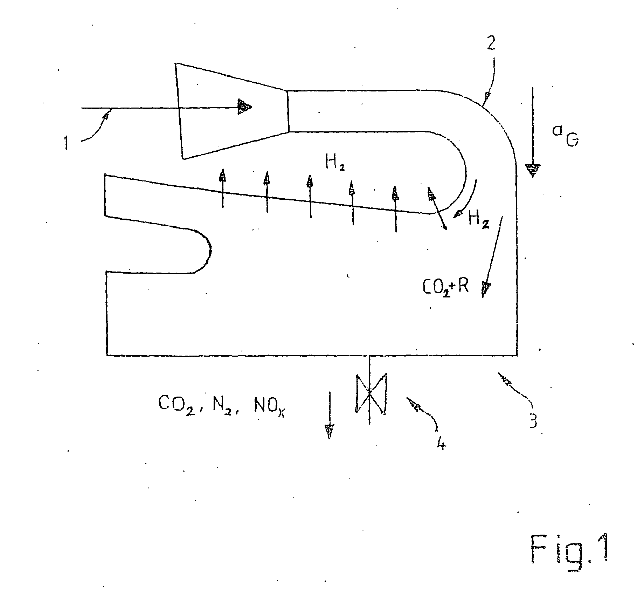

In Figur 1 ist in schematischer Darstellung eine Trennvorrichtung aufgeführt. Dieser wird ein wasserstoffhaltiger Fluidstrom 1 bzw. Reformat zugeführt, der insbesondere Kohlendioxid CO₂ und Wasserstoff H₂ umfasst. Der Fluidstrom 1 wird mittels einem gebogenen Rohr 2 umgelenkt bzw. mit einer radialen Bescheunigung beaufschlagt, so dass eine gewisse Trennung des Wasserstoffs H₂ vom Kohlendioxid CO₂ und Restgasen R erfolgt.

In Strömungsrichtung hinter dem Rohr 2 ist ein Verzögerungselement 3 angeordnet, wobei sich aufgrund des vergleichsweise großen Querschnittes der wenigstens teilweise getrennte Fluidstrom 1 beruhigt und unter Zuhilfenahme der Erdbeschleunigung a_{G} als auch der durch das Rohr 2 erzeugten unterschiedlichen Kurvenradien der verschiedenen Teilströme eine Abtrennung bzw. Absaugung des Wasserstoffs H₂ von den Restgassen R wie z.B. vom Kohlendioxid CO₂ erreichbar ist. Die Restgase R bzw. das Kohlendioxid CO₂ werden mit Hilfe eines Überdruckventils 4 aus dem Behälter bzw. Verzögerungselement 3 abgelassen. Der Wasserstoffstrom H₂ wird in nicht näher dargestellter Weise einer Bremsstoffzelleneinheit zugeführt.

Mit Hilfe einer Trennvorrichtung wird der Fluidstrom 1 aufgrund der unterschiedlichen molekularen Gewichte des Wasserstoffs H₂ und der Restgase R bzw. des Kohlendioxids CO₂ abgetrennt. Das gekrümmte Rohr 2 führt zu einer radialen Beschleunigung des Fluidstroms 1 bzw. Reformatgases und fördert die Abtrennung. Hierdurch wird eine Abreicherung der Restgase R bzw. des Kohlendioxids CO₂ vom Fluidstrom 1 erreicht. Hiermit wird eine Rezirkulation des der Brennstoffzelleneinheit zugeführten Stoffstromes H₂ möglich, wodurch in vorteilhafter Weise die Ausnützung des im Fluidstrom 1 enthaltenen Wasserstoffs H₂ verbessert wird.

Die Trennvorrichtung gemäß Fig. 1 mit dem gebogenen Rohr 2 wird in bevorzugter Weise in der Strömungsrichtung vor einer Brennstoffzelle angeordnet, da an dieser Stelle im System vergleichsweise hohe Strömungsgeschwindigkeiten vorhanden sind, so dass besonders große Zentrifugalkräfte im Rohr 2 eine Trennung des vergleichsweise leichten Wasserstoffs H₂ vom relativ schweren Restgas R gewährleisten.

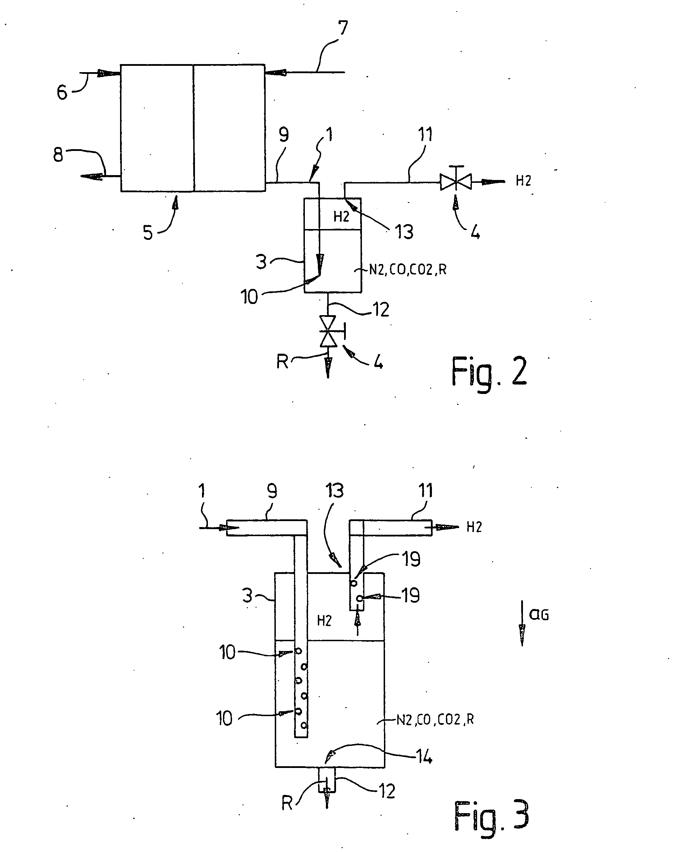

In Fig. 2 ist eine Trennvorrichtung in Strömungsrichtung hinter einer Brennstoffzelle 5 gemäß der Erfindung angeordnet. Die Brennstoffzelle 5 wird mit Luft 6 und einem wasserstoffreichen Fluidstrom 7 bzw. einem Reformat 7 eines nicht näher dargestellten Reformers versorgt. In nicht näher dargestellter Weise können zwischen der Brennstoffzelle 5 und dem nicht näher dargestellten Reformer Reinigungsvorrichtungen gemäß dem Stand der Technik vorgesehen werden.

Aus der Brennstoffzelle 5 strömt katodenseitig ein insbesondere wasserhaltiger Strom 8 sowie der Fluidstrom 1 heraus. Der Fluidstrom 1 wird gemäß der Erfindung mittels dem Verzögerungselement 3 bzw. Beruhigungselement 3 in einen Wasserstoffstrom H₂ und einen Restgasstrom R getrennt.

Zwischen dem Verzögerungselement 3 und der Brennstoffzelle 5 ist eine Leitung 9 angeordnet. Die Leitung 9 endet vorzugsweise im unteren Bereich des Verzögerungselementes 3 bzw. ragt entsprechend in dieses hinein, so dass sich ein Einströmbereich 10 in der Nähe des Behälterbodens befindet. Aufgrund der großen Unterschiede der Molekülmassen bzw. des großen Dichteunterschiedes zwischen Wasserstoff H₂ und den Restgasen R, sinken die Restgase R ab und der Wasserstoff H₂ "schwimmt" im oberen Abschnitt des Behälters bzw. Verzögerungselementes 3.

Bei den Ventilen 4 in Fig. 2 handelt es sich vorzugsweise um Taktventile 4, die beispielsweise nach einer Wartezeit von ca. 20 Minuten betätigt bzw. geöffnet werden. Hierdurch strömt durch eine Leitung 11 Wasserstoff H₂ in einen nicht näher dargestellten Sammelbehälter bzw. in bestimmten Fällen zurück zur Brennstoffzelle 5. Eine Ausströmöffnung 13 befindet sich an der höchsten Stelle des Behälters 3, so dass nahezu reiner Wasserstoff H₂ aus dem Behälter 3 mittels der Leitung 11 entnommen und vorzugsweise in die Anode der Brennstoffzelle 5 zurückgeführt wird.

Zum Ablassen der Restgase R in die Atmosphäre wird das Taktventil 4 einer Leitung 12 geöffnet. Eine Ausströmöffnung 14 ist insbesondere an der tiefsten Stelle des Behälters 3 vorgesehen, wodurch die Restgase R in die Leitung 12 strömen.

In Fig. 3 ist eine weitere Ausführungsform ddes Verzögerungselementes dargestellt. Im Unterschied zum Verzögerungselement 3 der Fig. 2 weist das Verzögerungselement 3 bzw. der Behälter 3 in Fig. 3 eine Einströmleitung 9 für den Fluidstrom 1 sowie eine Ausströmleitung 11 zum Ablassen von nahezu reinem Wasserstoff H₂ auf, wobei die beiden Leitungen 9, 11 mehrere kleine Durchlässe 10, 19 aufweisen. Hierdurch wird in vorteilhafter Weise die Durchlassfläche für einströmendes bzw. ausströmendes Gas 1, H₂ deutlich vergrößert, so dass eine Verwirbelung in dem Verzögerungselement 3 wirkungsvoll verhindert wird. Diese Maßnahme führt zu einer besonders vorteilhaften Trennung. Gegebenenfalls kann die Ausströmöffnung 14 nicht näher dargestellte, kleine Durchlässe aufweisen, die den Durchlässen 10, 19 weitgehend entsprechen.

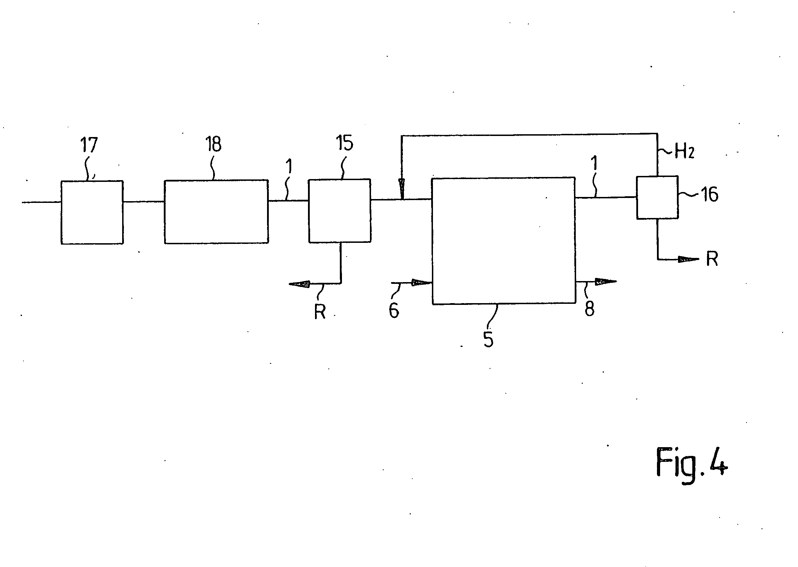

In Fig. 4 ist ein Blockschaltbild einer Brennstoffzellenanlage mit einer Massentrennvorrichtung 15, 16 gemäß der Erfindung dargestellt. Beispielhaft umfasst die Brennstoffzellenanlage einen Reformer 17 und gegebenenfalls eine in Strömungsrichtung dahinter angeordnete Shift-Einheit 18, die zur Reinigung des mittels dem Reformer 17 erzeugten Reformats vorgesehen ist und z.B. mehrere Reinigungsstufen aufweist.

In Strömungsrichtung hinter dem Reformer 17 ist optional die Massentrennvorrichtung 15 bzw. der Trenner 15 angeordnet'. Der Trenner 15 entspricht im Wesentlichen der Vorrichtung gemäß Fig. 1, d.h. der Trenner 15 weist insbesondere ein Rohr 2 auf.

In Strömungsrichtung hinter dem Trenner 15 ist die Brennstoffzelle 5 angeordnet, die somit vergleichsweise reinen Wasserstoff H₂ sowie Luft 6 erhält.

In der Brennstoffzelle 5 werden aus den Eduktströmen kathodenseitig der wasserdampfhaltige Strom 8 sowie anodenseitig der Fluidstrom 1. Der Trenner 16 ist optional vorzusehen. Der Wasserstoffstrom H₂ des Trenners 16 wird vorzugsweise als Eduktstrom der Brennstoffzelle 5 weiter verwertet. Gegebenenfalls kann der Wasserstoffstrom H₂ des Trenners 16 auch für andere Verwendungszwecke vorgesehen werden. Der Trenner 16 entspricht im Wesentlichen der Massentrennvorrichtung gemäß Fig. 2 bzw. Fig. 3.

## Patentansprüche

1. Brennstoffzellenanlage mit einer Brennstoffzelleneinheit, einer Umformeinheit zur Umformung von Stoffgemischen zu einem wasserstoffhaltigen Fluidstrom (1) und einer Trennvorrichtung (2, 3) zur Abtrennung wenigstens eines wasserstoffangereicherten Stoffstroms (H₂) von einem Fluidreststrom (CO₂, R) wobei die Trennvorrichtung (2, 3) als Massentrennvorrichtung zur Abtrennung unterschiedlicher Massen ausgebildet ist, **dadurch gekennzeichnet, dass** die Trennvorrichtung (2, 3) in Strömungsrichtung des Fluidstroms (1) hinter der Brennstoffzelleneinheit (5) angeordnet ist und dass der mittels der Trennvorrichtung (2, 3) abgetrennte wasserstoffangereicherte Stoffstrom der Brennstoffzelleneinheit (5) wieder zuführbar ist.

2. Vorrichtung nach Anspruch 1, **dadurch gekennzeichnet, dass** die Massen-Trennvorrichtung (2, 3) wenigstens ein Umlenkelement (2) zum Umlenken des Fluidstroms (1) aufweist.

3. Vorrichtung nach einem der vorgenannten Ansprüche, **dadurch gekennzeichnet, dass** das Umlenkelement (2) als Kreisbogenelement (2) ausgebildet ist.

4. Vorrichtung nach einem der vorgenannten Ansprüche, **dadurch gekennzeichnet, dass** die Massen-Trennvorrichtung (2, 3) wenigstens ein Verzögerungselement (3) zum Verzögern der Strömungsgeschwindigkeit aufweist.

5. Vorrichtung nach einem der vorgenannten Ansprüche, **dadurch gekennzeichnet, dass** im Bereich des Verzögerungselements (3) ein wesentlich größerer Strömungsquerschnitt als im Bereich des Umlenkelements (2) vorgesehen ist.

6. Vorrichtung nach einem der vorgenannten Ansprüche, **dadurch gekennzeichnet, dass** das Verzögerungselement (3) eine erste Öffnung (13) zum Ausströmen des wasserstoffangereicherten Stoffstroms (H₂) und eine zweite Öffnung (14) zum Ausströmen des Fluidreststroms (CO₂, R) aufweist.

7. Vorrichtung nach einem der vorgenannten Ansprüche, **dadurch gekennzeichnet, dass** die erste Öffnung (13) in vertikaler Richtung oberhalb der zweiten Öffnung (14) angeordnet ist.

8. Vorrichtung nach einem der vorgenannten Ansprüche, **dadurch gekennzeichnet, dass** die zweite Öffnung (14) am in vertikaler Richtung tiefsten Bereich des Verzögerungselements (3) angeordnet ist.

9. Vorrichtung nach einem der vorgenannten Ansprüche, **dadurch gekennzeichnet, dass** wenigstens an einer der Öffnungen (13, 14) ein Dosierelement (4) angeordnet ist.

10. Vorrichtung nach einem der vorgenannten Ansprüche, **dadurch gekennzeichnet, dass** das Dosierelement (4) als Taktventil (4) ausgebildet ist.

11. Vorrichtung nach einem der vorgenannten Ansprüche, **dadurch gekennzeichnet, dass** an einer Einströmöffnung des Verzögerungselements (3) wenigstens ein Einströmelement (9) und/oder an der ersten und/oder zweiten Öffnung (13, 14) wenigstens ein Ausströmelement (11, 12) angeordnet ist.

12. Vorrichtung nach einem der vorgenannten Ansprüche, **dadurch gekennzeichnet, dass** das Einströmelement (9) und/oder das Ausströmelement (11, 12) wenigstens teilweise im Innenbereich des Verzögerungselements (3) angeordnet sind.

13. Vorrichtung nach einem der vorgenannten Ansprüche, **dadurch gekennzeichnet, dass** das Einströmelement (9) und/oder das Ausströmelement (11, 12) mehrere Durchlässe (10, 19) zum Ein- bzw. Ausströmen der Ströme aufweisen.

14. Verfahren zum Betrieb einer Brennstoffzellenanlage gemäß einem der Ansprüche 1 bis 13, **dadurch gekennzeichnet, dass** der Massentrennvorrichtung (2, 3) der wasserstoffhaltige Fluidstrom (1) chargenweise zugeführt wird.

15. Verfahren nach Anspruch 14, **dadurch gekennzeichnet, dass** während einer Wartephase der wasserstoffhaltige Anteil des wasserstoffhaltigen Fluids (1) abgetrennt und aus einem Verzögerungselement (3) abgelassen wird.

## Claims

1. Fuel cell system having a fuel cell unit, a conversion unit for conversion of substance mixtures to a fluid flow (1) containing hydrogen, and a separation apparatus (2, 3) for separation of at least one substance flow (H₂) which has been enriched with hydrogen from a remaining fluid flow (CO₂, R), with the separation apparatus (2, 3) being in the form of a mass separation apparatus for separation of different masses, **characterized in that** the separation apparatus (2, 3) is arranged downstream from the fuel cell unit (5) in the flow direction of the fluid flow (1), and **in that** the substance flow, which has been enriched with hydrogen and separated by means of the separation apparatus (2, 3), can be passed back to the fuel cell unit (5) again.

2. Apparatus according to Claim 1, **characterized in that** the mass separation apparatus (2, 3) has at least one direction-changing element (2) for changing the direction of the fluid flow (1).

3. Apparatus according to one of the abovementioned claims, **characterized in that** the direction-changing element (2) is a circular arc element (2).

4. Apparatus according to one of the abovementioned claims, **characterized in that** the mass separation apparatus (2, 3) has at least one deceleration element (3) for deceleration of the flow rate.

5. Apparatus according to one of the abovementioned claims, **characterized in that** a considerably larger flow cross section is provided in the area of the deceleration element (3) than in the area of the direction-changing element (2).

6. Apparatus according to one of the abovementioned claims, **characterized in that** the deceleration element (3) has a first opening (13) for the substance flow (H₂) which has been enriched with hydrogen to flow out of, and a second opening (14) for the remaining fluid flow (CO₂, R) to flow out of.

7. Apparatus according to one of the abovementioned claims, **characterized in that** the first opening (13) is arranged above the second opening (14) in the vertical direction.

8. Apparatus according to one of the abovementioned claims, **characterized in that** the second opening (14) is arranged at the lowest area of the deceleration area (3) in the vertical direction.

9. Apparatus according to one of the abovementioned claims, **characterized in that** a metering element (4) is arranged on at least one of the openings (13, 14).

10. Apparatus according to one of the abovementioned claims, **characterized in that** the metering element (4) is a cyclically operated valve (4).

11. Apparatus according to one of the abovementioned claims, **characterized in that** at least one inlet flow element (9) is arranged on an inlet-flow opening of the deceleration element (3), and/or at least one outlet-flow element (11, 12) is arranged on the first and/or second opening (13, 14).

12. Apparatus according to one of the abovementioned claims, **characterized in that** the inlet-flow element (9) and/or the outlet-flow element (11, 12) are/is arranged at least partially in the inner area of the deceleration element (3).

13. Apparatus according to one of the abovementioned claims, **characterized in that** the inlet-flow element (9) and/or the outlet-flow element (11, 12) have/has a plurality of apertures (10, 19) for the flows to flow into and out of, respectively.

14. Method for operation of a fuel cell system according to one of Claims 1 to 13, **characterized in that** the mass separation apparatus (2, 3) is supplied with the fluid flow (1), which contains hydrogen, in batches.

15. Method according to Claim 14, **characterized in that**, during a waiting phase, the component containing hydrogen of the fluid (1) which contains hydrogen is separated, and is emitted from a deceleration element (3).

## Revendications

1. Installation de piles à combustible comportant une unité de piles à combustible, une unité de transformation pour transformer des mélanges de matières en un courant contenant de l'hydrogène (1) et un dispositif séparateur (2, 3) pour séparer au moins un courant de matière (H₂) enrichi en hydrogène, d'un courant résiduel de fluide (CO₂, R), le dispositif séparateur (2, 3) étant un dispositif séparateur massique pour séparer des masses différentes,
**caractérisée en ce que**
le dispositif séparateur (2, 3) est installé selon le sens du courant de fluide (1), en aval de l'unité de piles à combustible (5) et
le courant de matière enrichie en hydrogène, séparé par le dispositif séparateur (2, 3) est fourni de nouveau à l'unité de piles à combustible (5).

2. Dispositif selon la revendication 1,
**caractérisé en ce que**
le dispositif de séparation massique (2, 3) comporte au moins un élément de déviation (2) pour dévier le courant de fluide (1).

3. Dispositif selon l'une des revendications précédentes,
**caractérisé en ce que**
l'élément de déviation (2) est un élément en forme de coude de cercle (2).

4. Dispositif selon l'une des revendications précédentes,
**caractérisé en ce que**
le dispositif séparateur massique (2, 3) comporte au moins un élément de décélération (3) pour réduire la vitesse du courant.

5. Dispositif selon l'une des revendications précédentes,
**caractérisé en ce que**
dans la zone de l'élément de décélération (3) la section du courant est beaucoup plus grande que dans la zone de l'élément de déviation (2).

6. Dispositif selon l'une des revendications précédentes,
**caractérisé en ce que**
l'élément de décélération (3) comporte une première ouverture (13) pour la sortie du courant de matière, enrichi en hydrogène (H₂) et une seconde ouverture (14) pour la sortie du courant résiduel de fluide (CO₂, R).

7. Dispositif selon l'une des revendications précédentes,
**caractérisé en ce que**
la première ouverture (13) se trouve dans la direction verticale au-dessus de la seconde ouverture (14).

8. Dispositif selon l'une des revendications précédentes,
**caractérisé en ce que**
la seconde ouverture (14) se trouve dans la direction verticale dans la zone la plus basse de l'élément de décélération (3).

9. Dispositif selon l'une des revendications précédentes,
**caractérisé par**
un élément de dosage (4) sur au moins l'une des ouvertures (13, 14).

10. Dispositif selon l'une quelconque des revendications précédentes,
**caractérisé en ce que**
l'élément de dosage (4) est réalisé sous la forme d'une vanne cadencée (4).

11. Dispositif selon l'une des revendications précédentes,
**caractérisé en ce que**
l'ouverture d'entrée de l'élément de décélération (3) comporte au moins un élément d'entrée de courant (9) et/ou la première et/ou la seconde ouverture (13, 14) comportent au moins un élément de sortie de courant (11, 12).

12. Dispositif selon l'une des revendications précédentes,
**caractérisé en ce que**
l'élément d'entrée de courant (9) et/ou l'élément de sortie de courant (11, 12) sont prévus au moins en partie dans la zone intérieure de l'élément de décélération (3).

13. Dispositif selon l'une des revendications précédentes,
**caractérisé en ce que**
l'élément d'entrée de courant (9) et/ou l'élément de sortie de courant (11, 12) comportent plusieurs passages (10, 19) pour l'entrée et la sortie des courants.

14. Procédé de gestion d'une installation de piles à combustible selon l'une des revendications 1 à 13,
**caractérisé en ce que**
le dispositif séparateur massique (2, 3) reçoit le courant de fluide (1) contenant de l'hydrogène sous la forme de lots.

15. Procédé selon la revendication 14,
**caractérisé en ce qu'**
au cours d'une phase d'attente, on sépare la composante contenant de l'hydrogène du fluide (1) contenant de l'hydrogène et on l'évacue d'un élément de décélération (3).
